# EUROPÄISCHE PATENTSCHRIFT

(11) **EP 2 837 486 B1**
(45) Veröffentlichungstag und Bekanntmachung des Hinweises auf die Patenterteilung: **19.09.2018**
(21) Anmeldenummer: 13405100.2
(22) Anmeldetag: 14.08.2013
(51) Int. Cl.: B29C 49/42, B29C 49/46, B29K 67/00, F16K 27/00

(54) **Vorrichtung zum Kontrollieren von Blasmedien in der Streckblasmaschine**
Device for controlling blowing media in the stretch blowing machine
Dispositif de contrôle de fluides soufflés dans une machine d'étirage-soufflage

(43) Veröffentlichungstag der Anmeldung: 18.02.2015
(73) Patentinhaber: Eugen Seitz AG, 8623 Wetzikon (CH)
(72) Erfinder: Schmidt Joachim, CH-8442 Hettlingen (CH)
(74) Vertreter: Clerc, Natalia

(56) Entgegenhaltungen:
- DE-U1- 20 305 232
- US-A1- 2012 199 779
- US-A1- 2012 201 918
- US-A1- 2012 241 012

## Beschreibung

Die vorliegende Erfindung betrifft eine Vorrichtung zum Kontrollieren von Blasmedien in einer Streckblasmaschine zum Erzeugen von Hohlkörpern aus erwärmtem Vorformliegen gemäss dem Oberbegriff des unabhängigen Patentanspruches 1.

Blasmaschinen sind hinreichend aus dem Stand der Technik bekannt. Auf diesen Blasmaschinen werden typischerweise Hohlkörper aus thermoplastischen Kunststoffen mit Volumen zwischen 0,05 und 20 Litern hergestellt. Typische Blasteile sind Flaschen sowie Transport-, Verpackungs- und Lagerbehälter. Für Flaschen und Behälter bis 20 Liter Inhalt wird derzeit vorzugsweise Polyethylenterephthalat (PET) eingesetzt.

Eine Blasmaschine, welche beispielsweise für PET-Flaschen ausgelegt ist, ist in verschiedenen Varianten (mit und ohne mechanische Reckstange) bekannt. Dabei wird die rohr- oder glockenartige Blasdüse beispielsweise unmittelbar an die Mündung eines Vorformlings oder an einen diesen tragenden Transporter gasdicht angesetzt, um den Vorformling mit Niederdruckblasluft, Hochdruckblasluft oder einer Entlüftung zu verbinden. Die Beaufschlagung des Vorformlings mit Niederdruckblasluft bzw. Hochdruckblasluft wird üblicherweise durch eine Vielzahl von Steuerventilen realisiert, welche mit der Blasdüse in Verbindung stehen.

Die derzeit auf den Markt befindlichen industriellen Streckblasmaschinen erreichen heute Stückzahlen von bis zu 80.000 Flaschen pro Stunde, weshalb es selbstverständlich nötig ist, besonders schnelle Steuerventile für die Beaufschlagung mit Niederdruck bzw. Hochdruckblasluft zu konstruieren. Dabei gilt es den Aufbau und auch den Auslass des Luftdrucks bis 40 bar (Hochdruckblasluft) möglichst schnell zu bewerkstelligen. Ein bekanntes Verfahren hierfür ist den sogenannten "toten Luftraum" möglichst klein zu halten. Unter dem "toten Luftraum" ist die Luftsäule zu verstehen, welche sich zwischen dem Steuerventil und dem zu blasenden Vorformling befindet. Da dieser "tote Luftraum" mit dem in die Flasche geblasenen Luftvolumen entlüftet wird, verursacht er zudem eine Verschwendung der Hochdruckblasluft und damit von Energie.

In diesem Zusammenhang sei beispielsweise auf die US 7,927,093 B2 hingewiesen, welche sich bereits mit der Verringerung des "Toten Luftraums" beschäftigt. Hierzu wird in der US '093 B2 vorgeschlagen, ein Ventilgehäuse, welches alle benötigten Steuerventile beinhaltet, lösbar an der Vorderseite des Gehäuseblocks der Blasdüse anzubringen. Hierdurch soll nicht nur eine Verringerung des toten Luftraums erreicht werden; vielmehr wird durch die lösbare Anbringung des Ventilgehäuses an dem Gehäuseblock der Blasdüse die Wartung der Blasmaschine erheblich vereinfacht.

Weitere Vorrichtungen sind in den Dokumenten US2012/199779, US2012/241012 und DE20305232U1 beschrieben.

Die aus dem Stand der Technik bekannte Vorrichtung zum Kontrollieren von Blasmedien in einer Steckblasmaschine hat den Nachteil, dass sich diese nur unter grossem konstruktivem Aufwand produzieren lässt. Insbesondere ist es hierzu nötig, zwei nahezu perfekt aufeinander abgestimmte Gehäuse (Ventilgehäuse, Gehäuseblock der Blasdüse) zu fertigen und diese unter Einhaltung geringster Toleranzen miteinander zu verbinden. Darüber hinaus muss die Schnittstelle zwischen dem Ventilgehäuse und Gehäuseblock bei der bekannten Vorrichtung aufwendig abgedichtet werden, um Leckagen zu vermeiden.

Auf Grundlage der oben genannten Problemstellung ist es die Aufgabe der vorliegenden Erfindung, eine Vorrichtung zum Kontrollieren von Blasmedien in einer Streckblasmaschine anzugeben, welche den toten Luftraum zwischen den Steuerventilen und der Blasdüse minimiert und gleichzeitig einen besonders einfachen Aufbau aufweist.

Die oben genannte Aufgabe wird erfindungsgemäss durch eine Vorrichtung gemäss dem unabhängigen Patentanspruch 1 gelöst.

Demgemäss weist die erfindungsgemässe Vorrichtung einen Gehäuseblock mit einer ersten Durchgangsbohrung zur Aufnahme mindestens einer Blasdüse auf. Darüber hinaus sind ein erstes sowie ein zweites Ventil vorgesehen, welche jeweils in Fluidverbindung mit der ersten Durchgangsbohrung stehen und dazu ausgelegt sind, eine in der Durchgangsbohrung aufgenommene Blasdüse wahlweise mit einem ersten bzw. zweiten Fluidanschluss zu verbinden. Bei dem Fluidanschluss kann es sich beispielsweise um einen Hochdruck bzw. Niederdruck oder einen Entlüftungsanschluss handeln, welcher vorzugsweise ein gasförmiges Medium wie beispielsweise Luft enthält.

Die erfindungsgemässe Vorrichtung zeichnet sich insbesondere dadurch aus, dass der Gehäuseblock erste und zweite Ventilkanäle zur Aufnahme des ersten und zweiten Ventils innerhalb des Gehäuseblocks aufweist. Dabei stehen die ersten und zweiten Ventilkanäle in Fluidverbindung mit der ersten Durchgangsbohrung, in welcher die Blasdüse aufgenommen ist.

Die erfindungsgemässe Vorrichtung zum Kontrollieren von Blasmedien in einer Streckblasmaschine weist eine Vielzahl von Vorteilen auf. So sind die Steuerventile, durch die oben erwähnten Ventilkanäle, direkt in den Gehäuseblock der Blasdüse integriert, wodurch sich die erfindungsgemässe Vorrichtung in nur zwei Maschinenaufspannungen herstellen lässt. Insbesondere ist es dadurch nicht notwendig, ein separates Ventilgehäuse sowie einen Gehäuseblock für die Blasdüse herzustellen, wodurch Kosten und Material eingespart werden können. Als Folge dessen ist die erfindungsgemässe Vorrichtung kompakter, wodurch der Platzbedarf an der Streckblasmaschine erheblich verringert wird. Schliesslich sind Dichtungen und Schrauben durch die fehlende Trennstelle zwischen dem Ventilgehäuse und dem Gehäuseblock der Blasdüse nicht mehr notwendig, wodurch die Montage effizienter wird und die Risiken für Leckagen oder Fehler bei der Montage reduziert werden.

Vorteilhafte Weiterbildungen der erfindungsgemässen Vorrichtung sind den Unteransprüchen zu entnehmen.

So ist es in einer ersten Weiterbildung der erfindungsgemässen Vorrichtung zum Kontrollieren von Blasmedien vorgesehen, dass der erste und zweite Ventilkanal im Wesentlichen senkrecht gegenüber der ersten Durchgangsbohrung ausgerichtet sind. Wie anschliessend näher ausgeführt, wird durch die im Wesentlichen senkrechte Ausrichtung des ersten und zweiten Ventilkanals gegenüber der Durchgangsbohrung erreicht, dass der tote Luftraum auf ein Minimum reduziert wird, da die Ventilkanäle besonders nahe an der Durchgangsbohrung der Blasdüse angeordnet werden können.

Um den toten Luftraum noch weiter reduzieren zu können, ist es gemäss einem weiteren Aspekt vorgesehen, dass der erste Ventilkanal derart im Wesentlichen senkrecht gegenüber dem zweiten Ventilkanal ausgerichtet ist, dass das erste und zweite Ventil kreuzweise angeordnet sind. In diesem Zusammenhang sei erwähnt, dass die aus dem Stand der Technik bekannten Steuerventile üblicherweise eine Steuerseite aufweisen, welche einen grösseren Durchmesser als die Hochdruckseite aufweist. Dementsprechend können die Ventile, gemäss dieser Ausführungsform, enger aneinander gereiht werden, ohne dass sich die Steuerseiten der Ventile mit dem grösseren Durchmesser berühren. Somit kann die erfindungsgemässe Vorrichtung kompakter gebaut werden, wodurch der entstehende tote Luftraum erheblich reduziert werden kann. Darüber hinaus ist durch die Überkreuzanordnung auch weiterhin eine gute Servicezugänglichkeit zu den Ventilen gegeben.

Unter dem Begriff "im Wesentlichen senkrecht" ist zu verstehen, dass die einzelnen Ventilkanäle nicht zwangsläufig genau unter einem Winkel von 90° zueinander ausgerichtet sein müssen. Vielmehr schliesst diese Formulierung jeden Winkel ein, welcher eine Überkreuzanordnung der Ventile ermöglicht. "Im Wesentlichen senkrecht" bedeutet folglich lediglich, dass die Ventilkanäle alternierend auf unterschiedlichen Seitenflächen des Gehäuseblocks angebracht sind, wobei die niederdruckseitigen (d.h. steuerseitigen) Enden der Ventile jeweils die Längsachse eines gemeinsamen Sammelrohres (= zweite Durchgangsbohrung, siehe unten) schneiden. Konkret betrachtet können die Ventilkanäle bzw. die Ventile demnach bspw. auch unter einem Winkel zwischen 70 und 110° ausgerichtet sein.

Gemäss einem weiteren Aspekt der erfindungsgemässen Vorrichtung weist der Gehäuseblock ferner eine als Sammelkanal ausgebildete zweite Durchgangsbohrung auf, welche parallel zu der ersten Durchgangsbohrung verläuft und mit dem ersten und zweiten Ventilkanal sowie mit der ersten Durchgangsbohrung in Fluidverbindung steht. Unter dem Begriff "Sammelkanal" ist hierbei eine zu der ersten Durchgangsbohrung parallele Durchgangsbohrung zu verstehen, welche den ersten und zweiten Ventilkanal mit der ersten Durchgangsbohrung verbindet. Mit anderen Worten, die Hochdruckseite der Ventile steht jeweils mit dem Sammelkanal in Verbindung, welcher diese mit der ersten Durchgangsbohrung verbindet. Da vorzugsweise alle Ventile über einen einzigen Sammelkanal mit der ersten Durchgangsbohrung in Fluidverbindung stehen, kann das Ausmass des Gehäuseblocks weiter reduziert werden, wodurch der "tote Luftraum" minimiert wird.

Neben den ersten und zweiten Ventilen kann die Vorrichtung ferner beliebig viele weitere Ventile aufweisen, welche jeweils in Fluidverbindung mit der ersten Durchgangsbohrung stehen und dazu ausgelegt sind, die in der Durchgangsbohrung aufgenommene Blasdüse wahlweise mit beliebig vielen weiteren Fluidanschlüssen zu verbinden. Äquivalent zu den ersten und zweiten Ventilen ist es auch hierbei vorgesehen, dass der Gehäuseblock ferner beliebig viele weitere Ventilkanäle zur Aufnahme der entsprechenden Ventile innerhalb des Gehäuseblocks aufweist. Hierbei stehen selbstverständlich auch die entsprechenden Ventilkanäle in Fluidverbindung mit der ersten Durchgangsbohrung. Im Einzelnen ist es gemäss einer bevorzugten Ausführungsform vorgesehen, dass die Vorrichtung ferner dritte, vierte und fünfte Ventile und weitere aufweist, welche jeweils in Fluidverbindung mit der ersten Durchgangsbohrung stehen, wobei der Gehäuseblock folglich dritte, vierte und fünfte und weitere Ventilkanäle zur Aufnahme dieser Ventile aufweist. Demgemäss steht ausser Frage, dass durch das Vorsehen weiterer Ventile die Steuermöglichkeiten der Blasmaschine erheblich verbessert werden. So kann beispielsweise neben einer Entlüftung auch ein Ventil zum Recycling der bereits verwendeten Hochdruckblasluft vorgesehen sein. Auch ist es hierdurch denkbar, eine Vielzahl verschiedener Blasdrücke bereitzustellen.

Gemäss einer bevorzugten Ausführungsform ist dabei vorgesehen, dass mindestens ein Niederdruckventil, ein Hochdruck-Ventil sowie mindestens ein Entlüftungs-Ventil vorgesehen sind. Darüber hinaus kann, ein Recycling-Ventil vorgesehen sein. Weitere Ventile können dazu ausgebildet sein, Blasdrücke bereitzustellen, welche zwischen dem Niederdruck und dem Hochdruck liegen.

Wie bereits in Bezug auf den ersten und zweiten Ventilkanal erwähnt, ist es von Vorteil, diese kreuzweise anzuordnen. Dementsprechend ist es gemäss einer weiteren Umsetzung vorgesehen, dass die weiteren Ventilkanäle, bspw. der dritte, vierte und fünfte Ventilkanal, im Wesentlichen senkrecht gegenüber der ersten Durchgangsbohrung ausgerichtet sind, wobei die ersten, dritten fünften und ggf. weiteren ungeradzahligen Ventilkanäle jeweils derart senkrecht gegenüber den zweiten vierten und ggf. weiteren geradzahligen Ventilkanälen ausgerichtet sind, sodass die Ventile kreuzweise angeordnet sind. Dementsprechend wird der "tote Luftraum" effizient reduziert.

Bei der oben erwähnten kreuzweisen Anordnung der Ventile ist es bevorzugt, den Gehäuseblock im Wesentlichen rechteckig auszubilden, wobei der erste, dritte, fünfte und ggf. weitere ungeradzahlige Ventilkanäle jeweils auf einer ersten Seitenfläche des Gehäuseblocks angeordnet sind, und wobei der zweite und vierte und ggf. weitere geradzahlige Ventilkanäle jeweils auf einer zweiten, zur ersten Seitenfläche senkrechten Seitenfläche des Gehäuseblocks angeordnet sind. Mit anderen Worten, jeder zweite Ventilkanal und somit jedes zweite Ventil ist parallel entlang des Sammelkanals angeordnet, wodurch sich alternierend eine kreuzweise Anordnung der Ventile ergibt. Diese Anordnung ist besonders vorteilhalft in Bezug auf die Reduzierung des toten Luftraums. Dies ist insbesondere dann der Fall, wenn die Ventile gemäss eines weiteren Aspekts, jeweils eine von der ersten Durchgangsbohrung abgewandte Steuerseite aufweisen, welche einen Durchmesser aufweist, der grösser ist als der Durchmesser einer der ersten Durchgangsbohrungen zugewandten Hochdruckseite des jeweiligen Ventils. Anders ausgedrückt, lassen sich die Ventile auf diese Weise als Keile beschreiben, welche ineinander geschoben werden, um somit eine möglichst dichte Anordnung zu gewährleisten. Hierdurch können die gesamten Ventile besonders nahe an die erste Durchgangsbohrung heran geführt werden, wodurch sich der Tote Luftraum verringert und folglich die Schaltzeiten der Blasmaschine reduziert werden können.

Gemäss einer weiteren Ausführungsform kann die Vorrichtung ferner einen Anschlussblock aufweisen, welcher lösbar mit dem Gehäuseblock verbunden und dazu ausgebildet ist, jeden der Fluidanschlüsse mit einer Anschlussleitung zu verbinden. Der Anschlussblock kann beispielsweise durch Befestigungselemente (z. B. Schrauben) an dem Gehäuseblock angebracht werden, um diesen mit einer Luftdruckwelle bzw. mit einer Entlüftungsöffnung zu verbinden. Insbesondere können durch den Anschlussblock alle Fluidanschlüsse gleichzeitig mit ihrer jeweiligen Anschlussleitung verbunden werden, wodurch die Montagezeit erheblich reduziert wird.

Gemäss einem weiteren Aspekt kann die Vorrichtung für jedes Steuerventil mindestens ein Pilotventil aufweisen, welches lösbar mit dem Gehäuseblock verbunden und dazu ausgelegt ist, die im Gehäuseblock befindlichen Ventile anzusteuern. Die Pilotventile sind vorzugsweise als Magnetventile ausgebildet, wodurch die Schaltzeiten der erfindungsgemässen Vorrichtung optimiert werden können. Die Pilotventile können beispielsweise über Schraubverbindungen an der Aussenseite des Gehäuseblocks befestigt werden. In diesem Zusammenhang sei darauf hingewiesen, dass der Gehäuseblock dementsprechend weitere Verbindungskanäle aufweist, welche die Pilotventile mit den am Gehäuseblock befindlichen Ventilen verbindet.

Im Folgenden wird die erfindungsgemässe Vorrichtung mit Bezug auf die in den Figuren dargestellten Ausführungsformen näher erläutert.

Dabei zeigen:
- Fig. 1: eine perspektivische Frontansicht einer ersten Ausführungsform der erfindungsgemässen Vorrichtung zum Kontrollieren von Blasmedien in einer Streckblasmaschine;
- Fig. 2a: eine perspektivische Rückansicht der in Fig. 1 dargestellten Ausführungsform mit Anschlussblock;
- Fig. 2b: eine perspektivische Rückansicht der in Fig. 1 dargestellten Ausführungsform ohne Anschlussblock;
- Fig. 3: eine Querschnittansicht durch den Gehäuseblock der in Fig. 1 dargestellten ersten Ausführungsform;
- Fig. 4: einen Halbschnitt durch die in Fig. 1 dargestellte erste Ausführungsform; und
- Fig. 5: eine schematische Perspektivansicht eines Gehäuseblocks mit überkreuzt angeordneten Ventilkanälen.

In der folgenden detaillierten Figurenbeschreibung sind gleiche oder gleichwirkende Bauteile mit gleichen Bezugszeichen versehen.

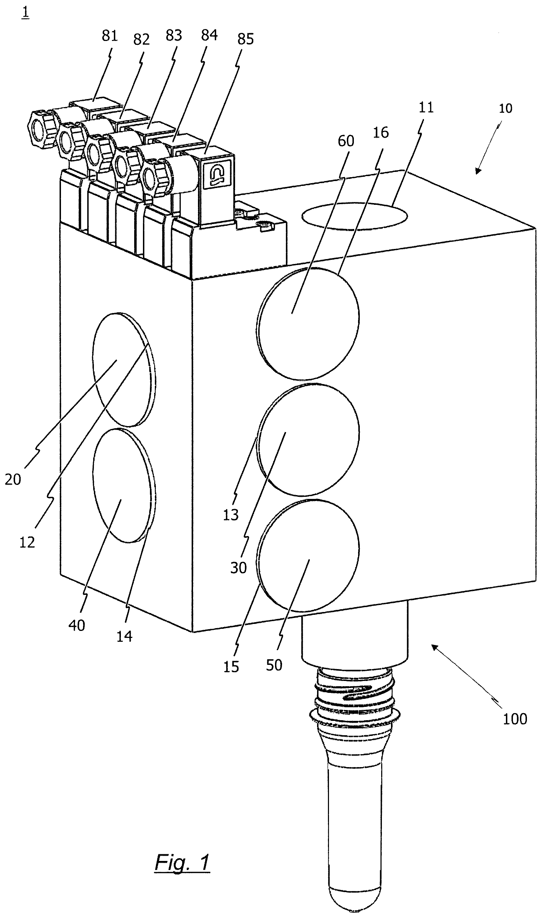

Eine perspektivische Ansicht einer ersten Ausführungsform der erfindungsgemässen Vorrichtung zum Kontrollieren von Blasmedien in einer Streckblasmaschine ist in den Figuren 1 bis 2b dargestellt. Wie zu erkennen ist, weist die Vorrichtung einen Gehäuseblock 10 mit einer ersten Durchgangsbohrung 11 auf, welche dazu ausgelegt ist, eine Blasdüse 100 aufzunehmen. Insbesondere ist die Durchgangsbohrung 11 zylinderförmig ausgebildet und erstreckt sich von der in Fig. 1 dargestellten oberen Seite des Gehäuseblocks 10 bis zur nicht dargestellten Unterseite.

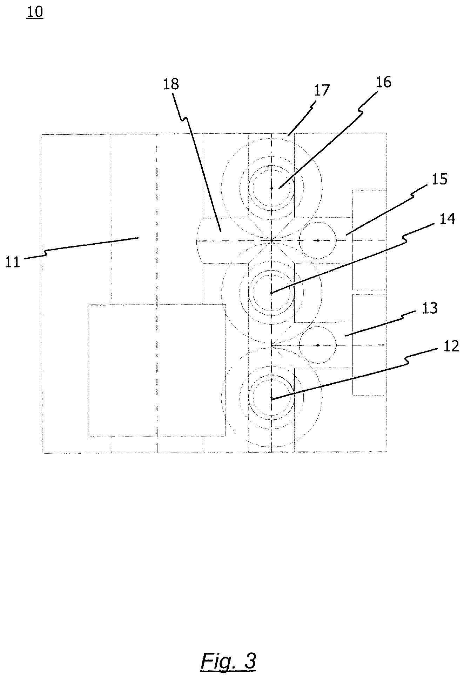

Ebenfalls im Gehäuseblock 10 befinden sich Steuerventile 20, 30, 40, 50 und 60, welche in Verbindung mit der ersten Durchgangsbohrung 11 stehen und dazu ausgelegt sind, die in der Durchgangsbohrung 11 aufgenommene Blasdüse 100 wahlweise mit einem jeweiligen Fluidanschluss zu verbinden. Die Fluidverbindung der Ventile 20, 30, 40, 50 mit der ersten Durchgangsbohrung 11 wird anschliessend mit Bezug auf die Darstellungen in den Figuren 3 bis 5 erläutert.

Der Gehäuseblock 10 weist eine der Anzahl an Ventilen entsprechende Anzahl an Ventilkanälen 12, 13, 14, 15 und 16 auf, welche zur Aufnahme der Ventile 20, 30, 40, 50 bzw. 60 innerhalb des Gehäuseblocks 10 dienen. Dabei stehen die Ventilkanäle 12, 13, 14, 15 und 16 jeweils in Fluidverbindung mit der ersten Durchgangsbohrung 11, wie dies beispielsweise aus Fig. 3 ersichtlich ist.

In Fig. 3 ist dargestellt, dass die ersten, zweiten, dritten, vierten, und fünften Ventilkanäle 12, 13, 14, 15, 16 über eine zweite Durchgangsbohrung 17 miteinander verbunden sind, wobei die zweite Durchgangsbohrung 17 über einen Verbindungskanal 18 mit der ersten Durchgangsbohrung 11 in Verbindung steht. Die zweite Durchgangsbohrung 17 ist dementsprechend als Sammelrohr ausgebildet, da diese in Fluidverbindung mit der Hochdruckseite jedes Ventils bzw. Ventilkanals 12, 13, 14, 15, 16 bzw. 20, 30, 40, 50, 60 steht.

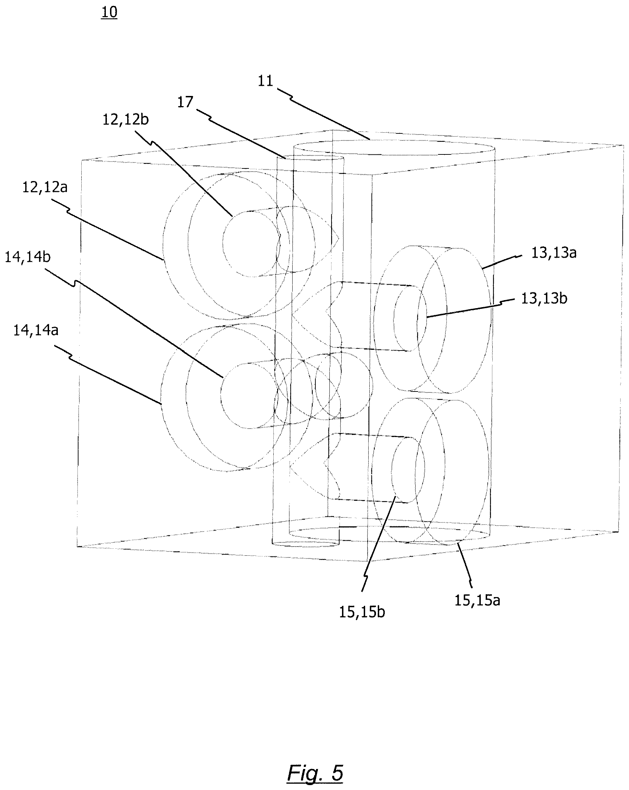

Die Anordnung der Ventilkanäle 12, 13, 14, 15, 16 zum Gehäuseblock 10 kann beispielsweise der schematischen Ansicht gemäss Fig. 5 entnommen werden. Es sei an dieser Stelle angemerkt, dass in Fig. 5, im Gegensatz zu Fig. 1, lediglich 4 Ventilkanäle 12, 13, 14 und 15 aus Gründen der Übersichtlichkeit dargestellt sind. Die Ventilkanäle 12, 13, 14, 15 sind jeweils im Wesentlichen senkrecht gegenüber der ersten Durchgangsbohrung 11 ausgerichtet. Darüber hinaus ist der erste Ventilkanal 12 derart im Wesentlichen senkrecht gegenüber dem zweiten Ventilkanal 13 ausgerichtet, sodass das erste und zweite Ventil (nicht in Fig. 5 dargestellt) kreuzweise angeordnet sind. Das gleiche gilt ebenfalls für die dritten und vierten Ventilkanäle 14 und 15, welche ebenfalls kreuzweise, d. h. im Wesentlichen senkrecht zueinander und zur ersten Durchgangsbohrung 11 angeordnet sind. Mit anderen Worten, jeder zweite Ventilkanal 12 und 14 bzw. 13 und 15 ist parallel ausgerichtet und überkreuzt sich mit den jeweils anderen dazwischen liegenden Ventilkanälen 13, 15 bzw. 12, 14.

Wie es der Fig. 5 entnommen werden kann, lässt sich hierdurch eine besonders dichte Anordnung der Ventilkanäle 13, 14, 15 und somit der Ventile erreichen. Hierdurch wird der tote Luftraum erheblich reduziert. Es sei nochmals verdeutlicht, dass "im Wesentlichen" senkrecht bedeutet, dass die einzelnen Ventilkanäle 12, 13, 14, 15 bzw. 16 nicht zwangsläufig unter einem Winkel von 90° zueinander ausgerichtet sein müssen. Vielmehr schliesst diese Formulierung jeden Winkel ein, welcher eine Überkreuzanordnung der Ventile 20, 30, 40, 50 und 60 ermöglicht.

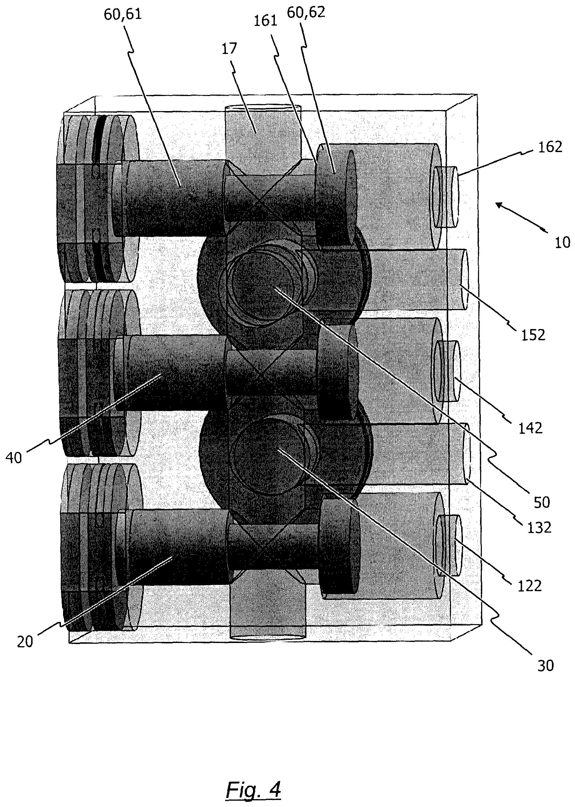

Es ist ferner aus Fig. 5 ersichtlich, dass die Ventilkanäle 12, 13, 14, 15 jeweils einen Bereich mit grossem Durchmesser 12a, 13a, 14a, 15a sowie einen Bereich mit kleinerem Durchmesser 12b, 13b, 14b, 15b aufweisen. Dies liegt darin begründet, dass die Ventile 20, 30, 40, 50, 60 vorzugsweise jeweils eine von der ersten Durchgangsbohrung 11 abgewandte Steuerseite (61 Fig. 4) aufweisen, welche einen Durchmesser aufweist, der grösser ist als der Durchmesser einer der ersten Durchgangsbohrung 11 zugewandten Hochdruckseite (62 Fig. 4) des jeweiligen Ventils (20, 30, 40, 50, 60). Speziell bei dieser Ausbildung der Steuerventile 20, 30, 40, 50, 60 lässt sich der "tote Luftraum" besonders gut durch die überkreuzten Ventile verringern.

Es ist ferner der Fig. 4, am Beispiel des fünften Ventils 60, zu entnehmen, dass die Ventile 20, 30, 40, 50, 60, z.B. durch eine Vorspannfeder (nicht dargestellt), im Ruhezustand mit ihrer Hochdruckseite 62 gegen den Ventilsitz 161 des jeweiligen Ventilkanals 16 vorgespannt sind. Demnach sind die Ventile 20, 30, 40, 50 und 60 in ihrem Ruhezustand geschlossen, d. h. es findet zunächst keine Druckluftbeaufschlagung der in der ersten Durchgangsbohrung 11 befindlichen Blasdüse 100 statt.

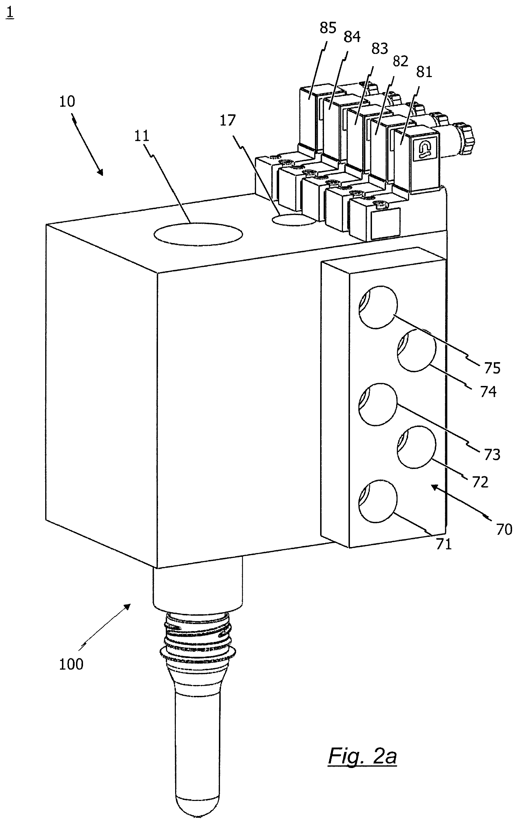

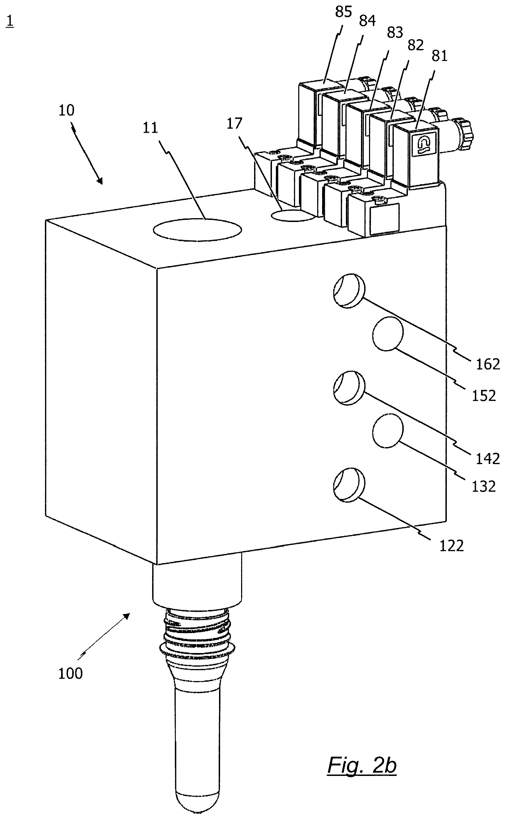

Erst wenn die Ventile 20, 30, 40, 50, 60 durch die in den Figuren 1 und 2 dargestellten Pilotventile 81, 82, 83, 84, 85 aktiviert werden, wird eine Verbindung zwischen dem jeweiligen Fluidanschluss 122, 132, 142, 152, 162 und der in der ersten Durchgangsbohrung 11 befindlichen Blasdüse 100 hergestellt, da das Ventil 20, 30, 40, 50, 60 aus seiner in Fig. 4 dargestellten Ruheposition nach rechts verschoben wird, wodurch der hochdruckseitige Teil 62 des Ventils 60 vom Ventilsitz 161 abgehoben wird und somit eine Fluidverbindung zum Sammelkanal 17 herstellt.

Zwar ist dies nicht explizit in Fig. 4 dargestellt, jedoch kann das jeweilige Pilotventil 81 bis 85 über einen entsprechenden Steuerluftkanal mit der Steuerseite 61 des Ventils 60 verbunden sein.

Zurückkommend auf Fig. 2a sei ferner erwähnt, dass die erfindungsgemässe Vorrichtung vorzugsweise einen Anschlussblock 70 aufweist, welcher lösbar mit dem Gehäuseblock 10 verbunden ist. Der Anschlussblock 70 ist dazu ausgebildet, jeden der Fluidanschlüsse 122, 132, 142, 152, 162 (Fig. 2b) mit einer Anschlussleitung 71, 72, 73, 74 bzw. 75 zu verbinden. Die Anschlussleitungen 71, 72, 73, 74, 75 bilden dabei eine Fluidverbindung mit einem Druckluftreservoir bzw. einer Entlüftungsöffnung. Der Anschlussblock 70 ist vorzugsweise über Befestigungselemente (z. B. mit Befestigungsschrauben, nicht dargestellt) an dem Gehäusebock 10 der Vorrichtung 1 befestigt. Somit können die Anschlussleitungen 71, 72,73, 74, 75 in einem Arbeitsschritt mit den Fluidanschlüssen 122, 132, 142, 152, 162 verbunden werden.

Die vorliegende Erfindung ist nicht auf die in den Darstellungen gezeigten speziellen Ausführungsformen beschränkt. Viel mehr ergibt sich diese aus einer Kombination der hierin offenbarten Merkmale. Beispielsweise sei erwähnt, dass die vorliegende nicht auf die in den Figuren dargestellte Anzahl von fünf Ventilen bzw. Ventilkanälen beschränkt ist. Vielmehr kann eine beliebige Anzahl an Ventilen vorgesehen sein. Entscheidend ist lediglich, dass die Ventile "überkreuz" das heisst alternierend, im Wesentlichen senkrecht zueinander angeordnet sind.

## Patentansprüche

1. Vorrichtung (1) zum Kontrollieren von Blasmedien in einer Streckblasmaschine zum Erzeugen von Hohlkörpern aus erwärmten Vorformlingen, wobei die Vorrichtung (1) folgendes aufweist:
einen Gehäuseblock (10) mit einer ersten Durchgangsbohrung (11) zur Aufnahme mindestens einer Blasdüse (100);
ein erstes Ventil (20), welches in Fluidverbindung mit der ersten Durchgangsbohrung (11) steht und dazu ausgelegt ist, eine in der Durchgangsbohrung (11) aufgenommene Blasdüse (100) wahlweise mit einem ersten Fluidanschluss (122) zu verbinden;
ein zweites Ventil (30), welches in Fluidverbindung mit der ersten Durchgangsbohrung (11) steht und dazu ausgelegt ist, die in der Durchgangsbohrung (11) aufgenommene Blasdüse (100) wahlweise mit einem zweiten Fluidanschluss zu verbinden, wobei der Gehäuseblock (10) ferner erste und zweite Ventilkanäle (12, 13) zur Aufnahme des ersten und zweiten Ventils (20, 30) innerhalb des Gehäuseblocks (10) aufweist, wobei die ersten und zweiten Ventilkanäle (12, 13) in Fluidverbindung mit der ersten Durchgangsbohrung (11) stehen und im Wesentlichen senkrecht gegenüber der ersten Durchgangsbohrung (11) ausgerichtet sind, **dadurch gekennzeichnet, dass** der erste Ventilkanal (12) und der zweite Ventilkanal (13) unter einem Winkel zwischen 70° und 110° zueinander und in Längsrichtung der ersten Durchgangsbohrung voneinander beabstandet ausgerichtet sind, so dass das erste und zweite Ventil (20, 30) über Kreuz angeordnet sind.

2. Vorrichtung (1) nach Anspruch 1,
wobei der erste Ventilkanal (12) im Wesentlichen senkrecht gegenüber dem zweiten Ventilkanal (13) ausgerichtet ist, sodass das erste und zweite Ventil (20, 30) kreuzweise angeordnet sind.

3. Vorrichtung (1) nach einem der vorhergehenden Ansprüche,
wobei der Gehäuseblock (10) ferner eine als Sammelkanal ausgebildete zweite Durchgangsbohrung (17) aufweist, welche im Wesentlichen parallel zu der ersten Durchgangsbohrung (11) verläuft und mit dem ersten und zweiten Ventilkanal (12, 13) sowie mit der ersten Durchgangsbohrung (11) in Fluidverbindung steht.

4. Vorrichtung (1) nach einem der vorhergehenden Ansprüche,
wobei die Vorrichtung (1) ferner ein drittes, viertes und fünftes Ventil (40, 50, 60) aufweist, welche jeweils in Fluidverbindung mit der ersten Durchgangsbohrung (11) stehen und dazu ausgelegt sind, die in der Durchgangsbohrung (11) aufgenommene Blasdüse (100) wahlweise mit einem dritten, vierten oder fünften Fluidanschluss zu verbinden,
und wobei der Gehäuseblock (10) ferner dritte, vierte und fünfte Ventilkanäle (14, 15, 16) zur Aufnahme des dritten, vierten und fünften Ventils (40, 50, 60) innerhalb des Gehäuseblocks (10) aufweist, wobei die dritten, vierten und fünften Ventilkanäle (14, 15, 16) in Fluidverbindung mit der ersten Durchgangsbohrung (11) stehen.

5. Vorrichtung (1) nach Anspruch 4,
wobei mindestens eines der Ventile (20, 30, 40, 50, 60) als Niederdruck-Ventil, mindestens eines der Ventile (20, 30, 40, 50, 60) als Hochdruck-Ventil und mindestens eines der Ventile (20, 30, 40, 50, 60) als Entlüftungs-Ventil ausgebildet ist.

6. Vorrichtung (1) nach Anspruch 5,
wobei mindestens eines der Ventile (20, 30, 40, 50, 60) als Recycle-Ventil ausgebildet ist.

7. Vorrichtung (1) nach einem der Ansprüche 4 bis 6,
wobei der dritte, vierte und fünfte Ventilkanal (14, 15, 16) im Wesentlichen senkrecht gegenüber der ersten Durchgangsbohrung (11) ausgerichtet sind,
und wobei der erste, dritte und fünfte Ventilkanal (12, 14, 16) jeweils derart im Wesentlichen senkrecht gegenüber dem zweiten und vierten Ventilkanal (13, 15) ausgerichtet sind, sodass die Ventile (20, 30, 40, 50, 60) kreuzweise angeordnet sind.

8. Vorrichtung (1) nach Anspruch 7,
wobei der Gehäuseblock (10) im Wesentlichen rechteckig ausgebildet ist und der erste, dritte und fünfte Ventilkanal (12, 14, 16) jeweils auf einer ersten Seitenfläche des Gehäuseblocks (10) angeordnet sind.

9. Vorrichtung (1) nach Anspruch 8,
wobei der zweite und vierte Ventilkanal (13, 15) jeweils auf einer zweiten, zur ersten Seitenfläche senkrechten Seitenfläche des Gehäuseblocks (10) angeordnet sind.

10. Vorrichtung (1) nach einem der vorhergehenden Ansprüche,
wobei die Ventile (20, 30, 40, 50, 60) jeweils eine von der ersten Durchgangsbohrung (11) abgewandte, Steuerseite (61) aufweisen, welche einen Durchmesser aufweist, der grösser ist als der Durchmesser einer der ersten Durchgangsbohrung (11) zugewandten Hochdruckseite (62) des jeweiligen Ventils (20, 30, 40, 50, 60).

11. Vorrichtung (1) nach einem der vorhergehenden Ansprüche,
wobei die Vorrichtung (1) ferner einen Anschlussblock (70) aufweist, welcher lösbar mit dem Gehäuseblock (10) verbunden und dazu ausgebildet ist, jeden der Fluidanschlüsse (122) mit einer Anschlussleitung (71, 72, 73, 74, 75) zu verbinden.

12. Vorrichtung (1) nach einem der vorhergehenden Ansprüche,
wobei die Vorrichtung (1) für jedes Ventil (20, 30, 40, 50, 60) mindestens ein Pilotventil (81, 82, 83, 84, 85) aufweist, welches lösbar mit dem Gehäuseblock (10) verbunden und dazu ausgelegt ist, die im Gehäuseblock (10) befindlichen Ventile (20, 30, 40, 50, 60) anzusteuern.

13. Vorrichtung (1) nach Anspruch 12,
wobei die Pilotventile (81, 82, 83, 84, 85) als Pneumatikventile ausgebildet sind.

14. Blasmaschine mit mindestens einer Blasform zum Erzeugen eines Hohlkörpers aus erwärmten Vorformlingen sowie mindestens einer Vorrichtung nach einem der Ansprüche 1 bis 13.

## Claims

1. Device (1) for controlling blowing media in a stretch blow-moulding machine for producing hollows bodies from heated preforms, wherein the device (1) has the following:
a housing block (10) with a first through-bore (11) for accommodating at least one blowing nozzle (100); a first valve (20) which is fluidically connected to the first through-bore (11) and is designed to selectively connect a blowing nozzle (100), accommodated in the through-bore (11), to a first fluid connection (122);
a second valve (30) which is fluidically connected to the first through-bore (11) and is designed to selectively connect the blowing nozzle (100), accommodated in the through-bore (11), to a second fluid connection, wherein the housing block (10) also has first and second valve ducts (12, 13) for accommodating the first and second valves (20, 30) within the housing block (10), wherein the first and second valve ducts (12, 13) are fluidically connected to the first through-bore (11) and are oriented substantially perpendicularly with respect to the first through-bore (11), **characterized in that** the first valve duct (12) and the second valve duct (13) are oriented at an angle of between 70° and 110° with respect to one another and so as to be spaced apart from one another in the longitudinal direction of the first through-bore, with the result that the first and second valves (20, 30) are arranged in the form of a cross.

2. Device (1) according to Claim 1,
wherein the first valve duct (12) is oriented substantially perpendicularly with respect to the second valve duct (13), with the result that the first and second valves (20, 30) are arranged in the form of a cross.

3. Device (1) according to either of the preceding claims,
wherein the housing block (10) also has a second through-bore (17), which is formed as a collecting duct and runs substantially parallel to the first through-bore (11) and is fluidically connected to the first and second valve ducts (12, 13) and also to the first through-bore (11).

4. Device (1) according to one of the preceding claims,
wherein the device (1) also has a third, fourth and fifth valve (40, 50, 60), which are each fluidically connected to the first through-bore (11) and are designed to selectively connect the blowing nozzle (100), accommodated in the through-bore (11), to a third, fourth or fifth fluid connection,
and wherein the housing block (10) also has third, fourth and fifth valve ducts (14, 15, 16) for accommodating the third, fourth and fifth valves (40, 50, 60) within the housing block (10), wherein the third, fourth and fifth valve ducts (14, 15, 16) are fluidically connected to the first through-bore (11).

5. Device (1) according to Claim 4,
wherein at least one of the valves (20, 30 ,40, 50, 60) is formed as a low-pressure valve, at least one of the valves (20, 30, 40, 50, 60) is formed as a high-pressure valve and at least one of the valves (20, 30, 40, 50, 60) is formed as a venting valve.

6. Device (1) according to Claim 5,
wherein at least one of the valves (20, 30, 40, 50, 60) is formed as a recycling valve.

7. Device (1) according to one of Claims 4 to 6,
wherein the third, fourth and fifth valve ducts (14, 15, 16) are oriented substantially perpendicularly with respect to the first through-bore (11),
and wherein the first, third and fifth valve ducts (12, 14, 16) are each oriented substantially perpendicularly with respect to the second and fourth valve ducts (13, 15) such that the valves (20, 30, 40, 50, 60) are arranged in the form of a cross.

8. Device (1) according to Claim 7,
wherein the housing block (10) is of substantially rectangular form, and the first, third and fifth valve ducts (12, 14, 16) are each arranged on a first side surface of the housing block (10).

9. Device (1) according to Claim 8,
wherein the second and fourth valve ducts (13, 15) are each arranged on a second side surface of the housing block (10), which is perpendicular to the first side surface.

10. Device (1) according to one of the preceding claims,
wherein the valves (20, 30, 40, 50, 60) each have a control side (61) which faces away from the first through-bore (11) and which has a diameter which is larger than the diameter of a high-pressure side (62), facing the first through-bore (11), of the respective valve (20, 30, 40, 50, 60) .

11. Device (1) according to one of the preceding claims,
wherein the device (1) also has a connection block (70) which is releasably connected to the housing block (10) and which is designed to connect each of the fluid connections (122) to a connection line (71, 72, 73, 74, 75).

12. Device (1) according to one of the preceding claims,
wherein the device (1) has, for each valve (20, 30, 40, 50, 60), at least one pilot valve (81, 82, 83, 84, 85) which is releasably connected to the housing block (10) and which is designed to actuate the valves (20, 30, 40, 50, 60) situated in the housing block (10).

13. Device (1) according to Claim 12,
wherein the pilot valves (81, 82, 83, 84, 85) are formed as pneumatic valves.

14. Blow-moulding machine having at least one blow mould for producing a hollow body from heated preforms, and having at least one device according to one of Claims 1 to 13.

## Revendications

1. Dispositif (1) de contrôle de fluides soufflés dans une machine d'étirage-soufflage pour la production de corps creux à partir d'ébauches chauffées, dans lequel le dispositif (1) comprend les composants suivants:
un bloc de boîtier (10) avec un premier perçage de passage (11) destiné à recevoir au moins une buse de soufflage (100);
une première soupape (20), qui est en communication fluidique avec le premier perçage de passage (11) et qui est conçue pour raccorder une buse de soufflage (100) logée dans le perçage de passage (11) au choix à un premier raccord de fluide (122);
une deuxième soupape (30), qui est en communication fluidique avec le premier perçage de passage (11) et qui est conçue pour raccorder la buse de soufflage (100) logée dans le perçage de passage (11) au choix à un deuxième raccord de fluide, dans lequel le bloc de boîtier (10) présente en outre des premier et deuxième canaux de soupape (12, 13) destinés à recevoir la première et la deuxième soupape (20, 30) à l'intérieur du bloc de boîtier (10), dans lequel les premier et deuxième canaux de soupape (12, 13) sont en communication fluidique avec le premier perçage de passage (11) et sont orientés essentiellement perpendiculairement au premier perçage de passage (11), **caractérisé en ce que** le premier canal de soupape (12) et le deuxième canal de soupape (13) sont orientés sous un angle compris entre 70° et 110° l'un par rapport à l'autre et sont espacés l'un de l'autre dans la direction longitudinale du premier perçage de passage (11), de telle manière que la première et la deuxième soupape (20, 30) soient disposées en position croisée.

2. Dispositif (1) selon la revendication 1, dans lequel le premier canal de soupape (12) est orienté essentiellement perpendiculairement par rapport au deuxième canal de soupape (13), de telle manière que la première et la deuxième soupape (20, 30) soient disposées en position croisée.

3. Dispositif (1) selon l'une quelconque des revendications précédentes, dans lequel le bloc de boîtier (10) présente en outre un second perçage de passage (17) formant un canal de collecte, qui s'étend essentiellement parallèlement au premier perçage de passage (11) et qui est en communication fluidique avec le premier et le deuxième canal de soupape (12, 13) ainsi qu'avec le premier perçage de passage (11).

4. Dispositif (1) selon l'une quelconque des revendications précédentes,
dans lequel le dispositif (1) présente en outre une troisième, une quatrième et une cinquième soupapes (40, 50, 60), qui sont en communication fluidique avec le premier perçage de passage (11) et qui sont conçues pour raccorder la buse de soufflage (100) logée dans le premier perçage de passage (11) au choix à un troisième, un quatrième ou un cinquième raccord de fluide,
et dans lequel le bloc de boîtier (10) présente en outre des troisième, quatrième et cinquième canaux de soupape (14, 15, 16) destinés à recevoir la troisième, la quatrième et la cinquième soupape (40, 50, 60) à l'intérieur du bloc de boîtier (10), dans lequel les troisième, quatrième et cinquième canaux de soupape (14, 15, 16) sont en communication fluidique avec le premier perçage de passage (11).

5. Dispositif (1) selon la revendication 4, dans lequel au moins une des soupapes (20, 30, 40, 50, 60) est une soupape à basse pression, au moins une des soupapes (20, 30, 40, 50, 60) est une soupape à haute pression et au moins une des soupapes (20, 30, 40, 50, 60) est une soupape de purge d'air.

6. Dispositif (1) selon la revendication 5, dans lequel au moins une des soupapes (20, 30, 40, 50, 60) est formée par une soupape de recyclage.

7. Dispositif (1) selon l'une quelconque des revendications 4 à 6,
dans lequel le troisième, le quatrième et le cinquième canal de soupape (14, 15, 16) sont orientés essentiellement perpendiculairement par rapport au premier perçage de passage (11),
et dans lequel le premier, le troisième et le cinquième canal de soupape (12, 14, 16) sont respectivement orientés essentiellement perpendiculairement par rapport au deuxième et au quatrième canal de soupape (13, 15), de telle manière que les soupapes (20, 30, 40, 50, 60) soient disposées en position croisée.

8. Dispositif (1) selon la revendication 7, dans lequel le bloc de boîtier (10) est de forme essentiellement rectangulaire et le premier, le troisième et le cinquième canal de soupape (12, 14, 16) sont respectivement disposés sur une première face latérale du bloc de boîtier (10).

9. Dispositif (1) selon la revendication 8, dans lequel le deuxième et le quatrième canal de soupape (13, 15) sont respectivement disposés sur une deuxième face latérale du bloc de boîtier (10) perpendiculaire à la première face latérale.

10. Dispositif (1) selon l'une quelconque des revendications précédentes, dans lequel les soupapes (20, 30, 40, 50, 60) présentent respectivement un côté de commande (61) situé à l'opposé du premier perçage de passage (11), qui présente un diamètre qui est plus grand que le diamètre d'un côté haute pression (62) de la soupape respective (20, 30, 40, 50, 60) tourné vers le perçage de passage (11).

11. Dispositif (1) selon l'une quelconque des revendications précédentes, dans lequel le dispositif (1) présente en outre un bloc de raccordement (70), qui est assemblé de façon amovible au bloc de boîtier (10) et qui est configuré pour raccorder chacun des raccords de fluide (122) à une conduite de raccordement (71, 72, 73, 74, 75).

12. Dispositif (1) selon l'une quelconque des revendications précédentes, dans lequel le dispositif (1) présente pour chaque soupape (20, 30, 40, 50, 60) au moins une soupape pilote (81, 82, 83, 84, 85), qui est raccordée de façon amovible au bloc de boîtier (10) et qui est conçue pour commander les soupapes (20, 30, 40, 50, 60) se trouvant dans le bloc de boîtier (10).

13. Dispositif (1) selon la revendication 12, dans lequel les soupapes pilotes (81, 82, 83, 84, 85) sont formées par des soupapes pneumatiques.

14. Machine de soufflage avec au moins un moule de soufflage pour la production d'un corps creux à partir d'ébauches chauffées ainsi qu'au moins un dispositif selon l'une quelconque des revendications 1 à 13.
